# EUROPEAN PATENT APPLICATION

(11) **EP 4 030 692 A1**
(43) Date of publication of application: **20.07.2022**
(21) Application number: 21151392.4
(22) Date of filing: 13.01.2021
(51) Int. Cl.: H04L 12/24, H04B 7/00

(54) **ON-DEMAND GATEWAY NODES FOR SATELLITE COMMUNICATION**

(71) Applicant: Siemens Aktiengesellschaft, 80333 München (DE)
(72) Inventor: Huth, Hans-Peter, 80638 München (DE); Zeiger, Florian, 85635 Höhenkirchen-Siegertsbrunn (DE)

(57) **Abstract**

The invention discloses an automated method for deploying a communication system comprising communication satellites (1) and terrestrial client nodes (2), wherein at least one of the satellites (1) configures and enables at least one of the client nodes (2) such as, that the client node (2) can act as a gateway node (G) for communication of other client nodes (2) with the satellite (1)

A related communication system is disclosed as well.

## Description

### FIELD OF THE INVENTION

The present invention relates to an automated method and a system for deploying a communication system comprising communication satellites and terrestrial client nodes.

### BACKGROUND OF THE INVENTION

SatCom is a very promising technology to offer worldwide industrial communication services and to run industrial plants securely over industrial communication links available everywhere. When satellite communication links are required in cities or areas with dense population, a coordinated access to the satellite radio link is required to use the capacity of the link efficiently, e.g. avoid exceeding the maximum number of supported users by the satellite link. In this situation, communication bandwidth is available in principle but cannot be used due to the scaling limits of the numbers of clients being connected. The reason here is the complex media access and signalling, e.g. handshake between ground terminal and satellite needed to connect both.

Signalling and media access take time and - if done simultaneously by many clients - will significantly degrade the link performance, so no data transmission for the clients doing the handshake can be performed. In addition, clients can also be mobile, e.g. trucks, trains, production vessels, and scenarios with a high degree of mobility and also a high number of clients, e.g. in cities or in IoT scenarios, the typical client via ground station to satellite setup will reach its limitations with respect to scalability and mobility, as usually ground stations are static, pre-defined and not mobile. Typically, satellite communication is established through ground stations, operating antennas in large scale (in number and size). This approach does not work with mobile clients.

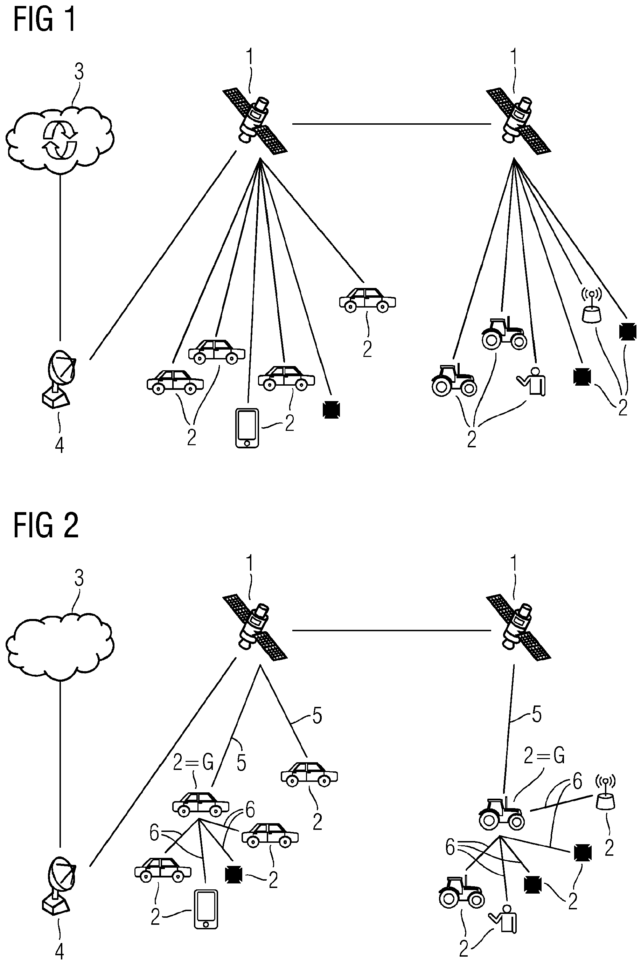

FIG. 1 shows a block diagram of a satellite communication system according to the state of the art. A satellite ground station 4 with connection to the internet 3 has a communication link to a satellite 1 which itself has a further connection to another satellite 1. The satellites 1 have communication links to terrestrial moveable client nodes 2, such as for example cars, mobile phones, or laptops. To each device (= client node 2) a separate communication link is established.

### SUMMARY OF THE INVENTION

The objective of the present invention is to provide a solution for an improvement of satellite communication with mobile clients.

To accomplish the objective, the present invention provides a solution according to the independent claims. Advantageous embodiments are provided in the dependent claims.

According to an aspect of the invention a system is proposed where client nodes are technically enabled to communicate directly with satellites, e.g. LEO/MEO satellite constellations, GEO satellites, etc. Client nodes can also act as ground stations for other client nodes, also including client nodes without a satellite modem. This "virtual ground station feature" is enabled through a set of software and virtualized components/modules. Client nodes can also communicate with other client nodes.

The key modules of such a system are responsible for the deployment of the ground station software, topology management - creating and managing requests for on-demand creation of ground stations -, the mobility management -re-deployment of software defined ground stations -, service management and the network management.

The proposed system can dynamically (re-)deploy ground station functionality on mobile or stationary client nodes. This ground station feature enables client nodes to act as communication and service gateway for a defined set, e.g. neighbouring, of client nodes. Thus, the ground-to-satellite communication link can be used efficiently with a much better level of scaling.

As client nodes are moving, the proposed system manages communication links during operations by dynamically redeploying functionalities, modifying routing pattern, and (re-)deploying appropriate virtual network functions and components, e.g. SW firewalls, SW gateways, to the system components (satellites, ground station, client nodes).

The mechanism reconfigures satellite communication networks during runtime and allows an efficient management of the scarce resources of direct communication links between terrestrial terminals (= client nodes) and satellites. The mechanism is also able to handle the mobility of all nodes (satellites and client nodes) and will reconfigure the topology according to the selected optimization goal during runtime. Thus, partial outages of nodes (even the gateway nodes) will be handled and a system reconfiguration will happen. Future satellite systems will require such mechanisms to offer services also in scenarios with many client nodes, e.g. in cities or IoT systems.

The invention claims an automated method for deploying a communication system comprising communication satellites and terrestrial client nodes, wherein at least one of the satellites configures and enables at least one of the client nodes such as, that the client node can act as a gateway node for communication of other client nodes with the satellite.

The advantage of the invention is that ground station functionality is dynamically (re-)deployed on mobile or stationary client nodes by communication satellites.

In a further embodiment of the method a topology management module implemented in the satellite maintains a topology of the communication system using a client register, whereby the client register saves data of the client nodes, whereby the data comprises capabilities and parameters of the client nodes.

In a further embodiment of the method the topology management module observes the number and quality of point-to-point communication links between the satellite and the client nodes and calculates the number of required gateway nodes to achieve a defined communication setup. A defined communication setup can for example be best communication links or optimized communication links regarding communication transmission capability and/or number of client nodes.

In a further embodiment of the method the topology management module signals a request to a network management module implemented in the client nodes being potential gateway nodes and the network management module of client nodes capable of taking the role as a gateway node answer with a token of readiness.

In a further embodiment of the method the topology management module sends first configuration requests to at least some of the gateway role capable client nodes and second configuration requests to all other client nodes and waits for an acknowledgement by the gateway nodes and client nodes.

In a further embodiment of the method as soon as all acknowledgements are received, the topology management module updates the client register. This means, that all data of the client nodes are updated and therefore the client register represents the status of the communication system.

In a further embodiment of the method the network management module of client node not working as gateway nodes broadcast a connection request to at least one assigned gateway node and follows the pre-defined connection mechanism to connect to the assigned gateway node.

The invention further claims a communication system comprising communication satellites and terrestrial client nodes, wherein at least one of the satellites is designed and programmed to configure and enable at least one of the client nodes such as, that the client node can act as a gateway node for communication of other client nodes with the satellite.

In a further embodiment of the system a topology management module implemented in the satellite is designed and programmed to maintain a topology of the communication system using a client register, whereby the client register is designed and programmed to save data of the client nodes, whereby the data comprises capabilities and parameters of the client nodes.

In a further embodiment of the system the topology management module is designed and programmed to observes the number and quality of point-to-point communication links between the satellite and the client nodes and to calculate the number of required gateway nodes in order to achieve a defined communication setup.

In a further embodiment of the system the topology management module is designed and programmed to signal a request to a network management module implemented in the client nodes being potential gateway nodes and the network management module of client nodes capable of taking the role as a gateway node are designed and programmed to answer with a token of readiness.

In a further embodiment of the system the topology management module is designed and programmed to send first configuration requests to at least some of the a gateway role capable client nodes and second configuration requests to all other client nodes and to wait for an acknowledgement by the gateway nodes and client nodes.

In a further embodiment of the system the topology management module is designed and programmed updates the client register as soon as all acknowledgements are received.

In a further embodiment of the system the network management module of client nodes not working as gateway nodes is designed and programmed to broadcast a connection request to at least one assigned gateway node and to follow a pre-defined connection mechanism to connect to the assigned gateway node.

Further benefits and advantages of the present invention will become apparent after a careful reading of the detailed description with appropriate reference to the accompanying drawings.

### BRIEF DESCRIPTION OF THE DRAWINGS

- FIG. 1: shows a block diagram of a system according to the state of the art,
- FIG. 2: shows a block diagram of a communication system with gateway nodes,
- FIG. 3: shows a block diagram of the modules of the communication system and
- FIG. 4: shows a functional diagram of the interaction of the modules and components of the communication system.

### DETAILED DESCRIPTION OF THE INVENTION

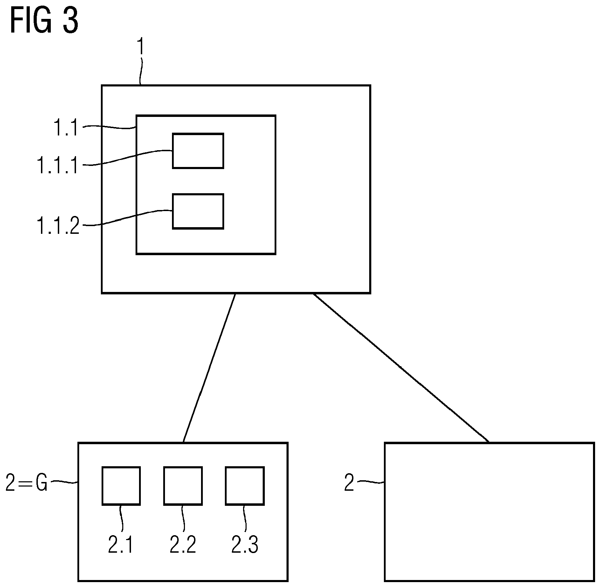

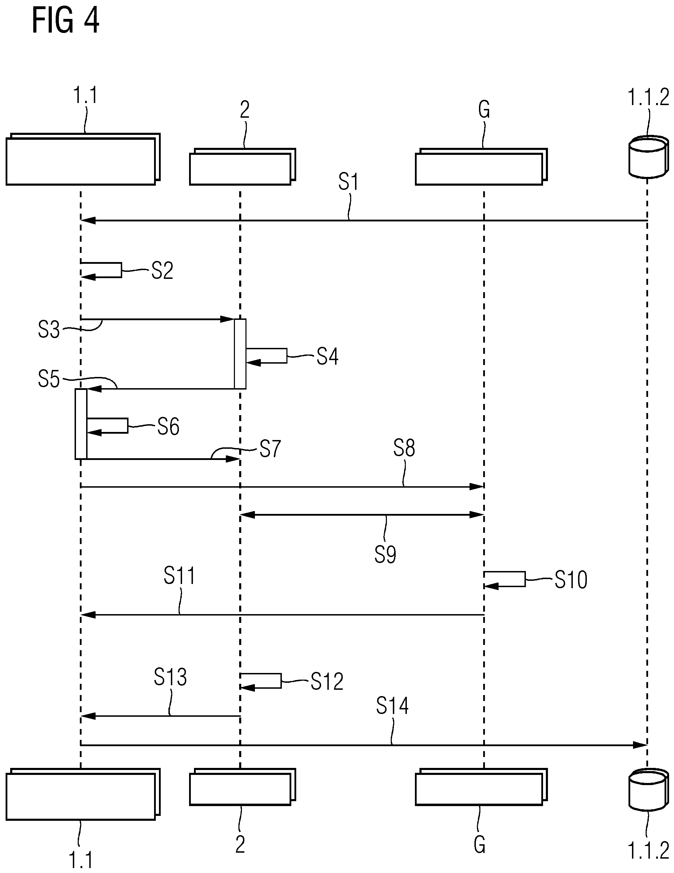

As an example of the invention FIG. 2 shows a block diagram of a communication system with satellites 1 and client nodes 2. A satellite ground station 4 with connection to the internet 3 has a communication link to a satellite 1 which itself has a further connection to another satellite 1. The satellites 1 have first communication links 5 to terrestrial moveable client nodes 2 such as for example cars, mobile phones, or laptops. Two of the client nodes 2 are acting as a gateway node G with second communication links 6 to other client nodes 2. Therefore, the amount of first communication links 5 ids reduced. How the gateway nodes G are deployed and established are described in FIG. 4. The modules within the satellites 1 and the client nodes 2 necessary for the deployment are shown in FIG. 3.

FIG. 3 shows a block diagram of the modules of the main components of the communication system. The satellite 1 comprises a topology management module 1.1. The topology management module 1.1 comprises a mobility management module1.1.1 and a client register 1.1.2. The satellite 1 is communicating with client nodes 2, e.g. smart phones, laptops, car electronic, etc. The client node 2 can act as a gateway node G. The client nodes 2 comprises a network management module 2.1, a service management module 2.2 and a security management module 2.3.

FIG. 4 shows a functional diagram of the interaction of the modules and components of the claimed system according to FIG. 2 and FIG. 3 and the claimed method.

### Description and functionality of the modules:

Topology management module 1.1: The topology management module 1.1 is running on a satellite 1 and maintains the topology of the communication network using a client register 1.1.2 (= step S1: synchronization with client register 1.1.2). The client register 1.1.2 holds all known client nodes 2 with its capabilities and parameters, such as geolocation for availability, trajectory (optional), and/or communication status.

The topology management module 1.1 observes the number and quality of the direct (point-to-point) communication links between the satellites 1 and the client nodes 2 and calculates the number of required gateway nodes G for the best possible communication setup (= step S2: check topology).

This calculation considers all known client nodes 2 (from the client register 1.1.2) and can now take different optimization strategies into account (e.g., maximum throughput, reliability, average bandwidth, number of client nodes 2) and the optimization strategy can be defined by a system administrator.

The planning step of the topology management module 1.1 also considers the near future situation based on the satellite's 1 trajectory and the locations of the different terrestrial terminals (= satellite ground station 4 and client nodes 2) by using the output of the mobility management module 1.1.1. As a result, the optimal number of direct satellite-to-ground communication links can be calculated, thus, also giving the number of required gateway nodes G (= part of step S2). Based on the output of the mobility management module 1.1.1, the set of potential candidates of gateway nodes G is calculated.

The topology management module 1.1 now signals a request to all potential gateway nodes G (= step S3: request for new gateway nodes G with given set of requirements) and all capable client nodes 2 will answer (= step S4: process requirements and process token; and step S5: send token) - this ensures, that the selected gateways nodes G (step S6: select set of dynamic gateway nods G) are also ready for taking that role in the near future. The topology management module 1.1 sends then configuration requests to the client nodes 2 (= step S7: notification to client nodes 2; step S8: notification to gateway nodes G)), either for gateway node G configuration (= step S10: configure client node 2 as gateway node G) or as client node 2 configuration (=step 12: configure client node 2 as client node connection) and waits for an acknowledgement. As soon as all acknowledgements (from client nodes 2, step S13; and gateway nodes G, step S11) are received, the topology management module 1.1 updates the client register 1.1.2 (= step S14).

Mobility management module 1.1.1: the mobility management module 1.1.1 is a sub-system of the topology management module 1.1 and is responsible for analysing the potential future system topologies based on the position of the satellite 1 and the relative positions of the terrestrial clients 2. The main output of the mobility management module 1.1.1 is an estimate of the client nodes' 2 availability in the defined time horizon.

Network management module 2.1: This component is running on each client node 2 and is responsible to handle administrative as well as payload communication to the satellites 1. As soon as the network management module 2.1 receives a set of requirements to be fulfilled in case of acting as gateway node G (e.g., bandwidth, availability, energy budget, trajectory) it is checking its own availability to act as a gateway node G. If the client node 2 can act as a gateway node G, a positive answer is sent to the satellite 1 (see "token" in FIG. 3). Clients nodes 2 then will receive either the request to reconfigure as gateway node G or to reconfigure as a client node 2:
(a) Configuration as gateway node G: This reconfiguration is done by configuration of virtual network functions, such as virtual gateways, virtual routers, and virtual firewalls. In case a client node 2 is equipped with a software defined radio (SDR), also the transmitter components are reconfigured purely through software. As soon as the physical link is established to the satellite 1 (either through SDR of via dedicated radio hardware), the required virtual network functions are configured and started. This allows the deployment of different client node 2 specific networks and client 2 specific network overlays, e.g. tenant network, virtual cloud infrastructures, edge-cloud deployments. The network management component for gateways nodes G also configures the authentication and on-boarding mechanisms for the client nodes 2 to be connected. Therefore, also the radio interface for terrestrial communication is brought up and enters a listening mode for client node 2 connections. As soon as the network configuration of a gateway node G is ready, the service management is triggered.
(b) Configuration as client node 2: The client node 2 is broadcasting a connection request to his assigned gateway node G and follows the pre-defined connection mechanism to connect to its gateway node G. As soon as connectivity is established the service management module 2.2 is triggered.

Service management module 2.2: The service management module 2.2 is responsible for client node 2 specific services (e.g., user applications) and can also trigger client 2 service specific network functions, e.g. a gateway node G that exposes a service to other tenant networks. As soon as the service management module 2.2 is completed, an acknowledgement is sent to the satellite(s) 1 (in case of client nodes 2 via the new gateway node G).

Security management module 2.3: Client nodes 2 typically will need to authenticate with the satellite 1 when connecting. In the system, only the virtual gateway node G authenticates in the connection establishment phase. This first authentication for getting a communication link via the new gateway node G, credentials are managed and distributed by the security management module 2.3 to the satellite 1. For further tenant / service-based security measures, client nodes 2 connect over this virtual gateway node G and the authentication can be tunnelled through the already established data connection to the satellite 1.

Optional extension: The topology management module 1.1 can also select client nodes 2 acting as backup gateway nodes BG in case a gateway node G is either leaving the area without prior notice or is not available due to other reasons. Backup gateway nodes BG then can either detect by themselves the loss of the gateway node G or are triggered by the satellite(s) 1.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: satellite
- 1.1: topology management module
- 1.1.1: mobility management module
- 1.1.2: client register
- 2: client node
- 2.1: network management module
- 2.2: service management module
- 2.3: security management module
- 3: internet
- 4: satellite ground station
- 5: first communication link
- 6: second communication link

- BG: Backup gateway node
- G: gateway node

- S1: synchronization with client register 1.1.2
- S2: check topology
- S3: request for new gateway nodes G with given set of requirements
- S4: process requirements and process token
- S5: send token to satellite 1
- S6: elect set of dynamic gateway nods G
- S7: notification to client nodes 2
- S8: notification to gateway nodes G
- S0: split and (re-) defined the set of gateway nodes G
- S10: configure client node 2 as gateway node G
- S11: status update from gateway nodes G
- S12: configure client node 2 for client node connection
- S13: status update from client nodes 2
- S14: updates the client register 1.1.2

## Claims

1. Automated method for deploying a communication system comprising communication satellites (1) and terrestrial client nodes (2), wherein at least one of the satellites (1) configures and enables at least one of the client nodes (2) such as, that the client node (2) can act as a gateway node (G) for communication of other client nodes (2) with the satellite (1).

2. Method according to claim 1, wherein a topology management module (1.1) implemented in the satellite (1) maintains a topology of the communication system using a client register (1.1.2, S1), whereby the client register (1.1.2) saves data of the client nodes (2), whereby the data comprises capabilities and parameters of the client nodes (2).

3. Method according to claim 2, wherein the topology management module (1.1) observes the number and quality of point-to-point communication links (S2) between the satellite (1) and the client nodes (2) and calculates the number of required gateway nodes (G) to achieve a defined communication setup.

4. Method according to claim 3, wherein the topology management module (1.1) signals a request (S3) to a network management module (2.1) implemented in the client nodes (2) being potential gateway nodes (G) and the network management module (2.1) of client nodes (2) capable of taking the role as a gateway node (G) answer with a token of readiness (S5).

5. Method according to claim 4, wherein the topology management module (1.1) sends first configuration requests to at least some of the gateway role capable client nodes (2; S10) and second configuration requests to all other client nodes (2, S12) and waits for an acknowledgement by the gateway nodes (G) and the client nodes (2).

6. Method according to claim 5, wherein as soon as all acknowledgements are received (S11, S13), the topology management module (1.1) updates the client register (1.1.2, S14).

7. Method according to claim 6, wherein the network management module (2.1) of client nodes (2) not working as gateway nodes (G) broadcast a connection request to at least one assigned gateway node (G) and follows the pre-defined connection mechanism to connect to the assigned gateway node (G).

8. Communication system comprising communication satellites (1) and terrestrial client nodes (2), wherein at least one of the satellites (1) is designed and programmed to configure and enable at least one of the client nodes (2) such as, that the client node (2) can act as a gateway node (G) for communication of other client nodes (2) with the satellite (1).

9. System according to claim 8, wherein a topology management module (1.1) implemented in the satellite (1) is designed and programmed to maintain a topology of the communication system using a client register (1.1.2), whereby the client register (1.1.2) is designed and programmed to save data of the client nodes (2), whereby the data comprises capabilities and parameters of the client nodes (2).

10. System according to claim 9, wherein the topology management module (1.1) is designed and programmed to observes the number and quality of point-to-point communication links between the satellite (1) and the client nodes (2) and to calculate the number of required gateway nodes (G) in order to achieve a defined communication setup.

11. System according to claim 10, wherein the topology management module (1.1) is designed and programmed to signal a request to a network management module (2.1) implemented in the client nodes (2) being potential gateway nodes (G) and the network management module (2.1) of client nodes (G) capable of taking the role as a gateway node (G) are designed and programmed to answer with a token of readiness.

12. System according to claim 11, wherein the topology management module (1.1) is designed and programmed to send first configuration requests to at least some of the a gateway role capable client nodes (2) and second configuration requests to all other client nodes (2) and to wait for an acknowledgement by the gateway nodes (G) and client nodes (2).

13. System according to claim 12, wherein the topology management module (1.1) is designed and programmed to update the client register (1.1.2) as soon as all acknowledgements are received.

14. System according to claim 13, wherein the network management module (2.1) of client nodes (2) not working as gateway nodes (G) is designed and programmed to broadcast a connection request to at least one assigned gateway node (G) and to follow a pre-defined connection mechanism to connect to the assigned gateway node (G).
